# EUROPEAN PATENT SPECIFICATION

(11) **EP 2 819 510 B1**
(45) Date of publication and mention of the grant of the patent: **13.11.2019**
(21) Application number: 13712479.8
(22) Date of filing: 02.03.2013
(51) Int. Cl.: A01N 1/02

(54) **ORGAN PERFUSION SYSTEM**
ORGANPERFUSIONSSYSTEM
SYSTÈME DE PERFUSION D'ORGANE

(30) Priority: 02.03.2012 EP 12001433
(43) Date of publication of application: 07.01.2015
(73) Proprietor: Rodos BioTarget GmbH, 30625 Hannover (DE)
(72) Inventor: SCHREITER, Thomas, 65549 Limburg (DE); GIESELER, Robert, 58791 Werdohl (DE); MARQUITAN, Guido, 45147 Essen (DE); FURCH, Marcus, 60596 Frankfurt am Main (DE); CANBAY, Ali, 45136 Essen (DE)
(74) Representative: Schüssler, Andrea
(86) International application number: PCT/EP2013/000625
(87) International publication number: WO 2013/127540

(56) References cited:
- EP-A1- 2 530 142
- WO-A1-00/60936
- WO-A2-2011/002926
- DE-A1- 10 348 746
- US-B1- 6 642 045
- T SCHREITER ET AL: "Characteristics of human non-cirrhotic and cirrhotic liver sections in a novel ex vivo perfusion system", ZEITSCHRIFT FÜR GASTROENTEROLOGIE, vol. 50, no. 01, 27 January 2012 (2012-01-27), page P2_28, XP055033413, ISSN: 0044-2771, DOI: 10.1055/s-0031-1295825
- T. SCHREITER ET AL: "An ex-vivo perfusion system emulating in-vivo conditions in non-cirrhotic and cirrhotic human liver", JOURNAL OF PHARMACOLOGY AND EXPERIMENTAL THERAPEUTICS, 6 June 2012 (2012-06-06), XP055033258, ISSN: 0022-3565, DOI: 10.1124/jpet.112.194167
- LEILA A. JONES ET AL: "Characterization of lipoprotein produced by the perfused rhesus monkey liver.", THE JOURNAL OF LIPID RESEARCH, vol. 25, no. 4, 1 April 1984 (1984-04-01), pages 319-335, XP055067681, ISSN: 0022-2275
- ECKHAUSER F ET AL: "Ex vivo normothermic hemoperfusion of the canine pancreas: Applications and limitations of a modified experimental preparation", JOURNAL OF SURGICAL RESEARCH, vol. 31, no. 1, 1 July 1981 (1981-07-01), pages 22-37, XP026299766, ISSN: 0022-4804, DOI: 10.1016/0022-4804(81)90026-3 [retrieved on 1981-07-01]

## Description

### Field of the Invention

The present invention relates to a novel perfusion system for perfusing organ explants, i.e. transplantable organs or parts thereof, derived from patients, healthy organ donors or animal sources, wherein the components of the system are integrated in an essentially closed circuit *via* circuit tubing for the provision of a constant flow rate, being supplied with nutrients and oxygen, to said explants for at least six hours. This system therefore maintains the anatomic and functional tissue integrity of the explants during the perfusion for at least six hours, i.e. said system furnishes conditions during the perfusion of explants that enable an improved and prolonged preservation of the anatomic and functional tissue integrity in comparison with the systems as described in the prior art.

### Background of the invention

Machine perfusion is generally performed to maintain an organ's quality until transplantation and to minimize reperfusion damage (Monbaliu, D. & J. Brassil, curr. Opin. Organ Transplant., 2010, 15: 160-166). These often take place as *ex-vivo* perfusions for keeping the quality of the organs. Ex-vivo perfusions, however, are also useful for studying drug-dependent organ toxicities, or for studying pathological conditions within said organs. These studies are mainly performed with organs/samples from animal sources like pig, sheep or rat (Groneberg, D. A. et al., Toxicol. Pathol., 2002, 30: 394-399; Grosse-Siestrup, C. et al., Toxicol. Pathol., 2002, 30: 749-754; Nagel, S. et al., Toxicol., Pathol., 2005, 33: 434-440; Thewes, S. et al., J. Med. Microbiol., 2007, 56: 266-270; Ali, A. M. et al., Exp. Physiol., 2000, 85: 469-478).

In mammals, drug metabolization and detoxification mainly occur within the liver and kidney. Hence, *in-vitro* and animal models have been established and have long been used for mimicking physiological and disease-like conditions in humans. However, data gathered from such models not always match the actual *in-vivo* situation (Olinga, P. et al., Toxicology In Vitro, 1997, 12: 77-100; Olinga, P. & G. M. M. Groothuis, 2001, Chapter 12. In: Molema G., Meijer D. K. F. (eds.). Drug targeting. Organ-specific strategies. Wiley Online Library). For example, despite their successful testing in such settings, >1,000 drugs are annually dropped or withdrawn due to adverse reactions. Hence, models that enable to reliably predict drug metabolization, pharmacodynamics, pharmacokinetics and pharmacogenomics - and that potentially embrace bioinformatic approaches - are a cornerstone of pharmaceutical development (Watkins, P. B. et al., Clin. Pharmacol. Ther., 2011, 89: 788-790; Liew, C. Y. et al., J. Comput. Aided Mol. Des., 2011, 25: 855-871), wherein *ex-vivo* or rather *in-vitro* models are preferable because of financial and ethical considerations (Cheng, F. et al., J. Theor. Biol., 2011, 290: 27-36). Several established *in-vitro* models employ primary human hepatocytes as well as isolated hepatic tissue to evaluate physiological, pathophysiological and pharmacological characteristics (Gebhardt, R. et al., Drug Metab. Rev., 2003, 35: 145-213; Gómez-Lechón, M. J. et al., Expert. Opin. Drug. Metab. Toxicol., 2008, 4: 837-854; Hewitt, N. J. et al., Xenobiotica, 2007, 37: 1196-1224). While hepatocytes are mostly grown in suspension or two-dimensionally, only few systems provide 3-D scaffolds enabling prolonged liver cell functionality (Gerlach, J. C., Cell Transplant., 2006, 15: S91-S103; Zeilinger, K. et al., Tissue Eng. Part C Methods, 2011, 17: 549-556; Balmert, S. C. et al., Int. J. Artif. Organs, 2011, 34: 410-421; Funatsu, K. et al., Art. Organs, 2001, 25: 194-200). Cell culture models proceed from the enzymatic digestion of human liver tissue to obtain singularized parenchymal and nonparenchymal cells, which can reorganize in mono- or co-culture within an *in-vitro* setting.

DE 103 48 746 A1 refers to enabling perfusion of organs requiring negative pressure, such as explicitly necessary for and explicitly mentioned for lung tissue. The described system has been referred to as an artificial lung. Nevertheless, the system in that reference may also allow for perfusing organs other than lung or components thereof. Importantly however, the system in this reference does not allow for functional read-outs and it does not provide a constant flow rate. In case an organ sets its own physiological flow rate, the functional capacity of such an organ kept in an *ex-vivo* apparatus continuously deteriorates. As a result, the arteriovenous flow increasingly worsens with time. Therefore, the flow of perfusion solution - and thus the supply of the organ with essential nutrients and, conversely, its disposal of metabolic waste components - progressively deteriorates if the perfusion system does not provide an externally controlled flow rate. This is confirmed by the document WO 00/60936 A1 which "allows for variable flow in response to autoregulation by the organ".

The perfusion system presented by Eckhauser et al. (J. of Surgical Research, Vol. 31, No. 1, 1981, pp. 22-37) has been specifically designed for perfusing canine pancreas. This system has moreover not been adapted to the very difficult conditions to be met for keeping human pancreata viable outside the human body. This perfusion system thus serves a very specialized application for animal organ experimentation. It would require considerable effort to adjust this system's technical parameters to enable the performance to a) other organs in general and b) specifically to organs of human origin.

EP 2 530 142 A1 discloses an organ perfusion system, wherein two peristaltic pumps are provided for perfusate inflow and outflow, respectively. In order to exchange the perfusate every 24 hours, fresh media is provided from a perfusate addition Scott bottle via a perfusate addition peristaltic pump. A perfusate recovery peristaltic pump is provided to transport perfusate into a perfusate recovery Scott bottle.

### Summary of the Invention

The invention is defined in the claims.

An object of the present invention is to provide a system that would enable to maintain the anatomic and functional tissue integrity of organ explants and would provide a possibility to investigate ongoing interactions within the organ. For example, in case of liver it should enable to investigate interactions between nonparenchymal [liver sinusoidal endothelial cells, cholangiocytes, hepatic stellate cells, Kupffer cells, dendritic cells, natural killer (NK) cells and natural killer T (NKT) cells] and parenchymal liver cells, and to analyze cell-specific effects of innovative treatments.

This object has been solved by the present invention by providing a perfusion system as defined in claim 1. The system preserves organ architecture and maintains the anatomic and functional tissue integrity during the perfusion of the explants for at least six hours.

The components of the system are integrated in an essentially closed circuit *via* circuit tubing for the provision of a constant flow rate, being supplied with nutrients and oxygen, to said explants for at least six hours.

### Brief Description of the Drawings

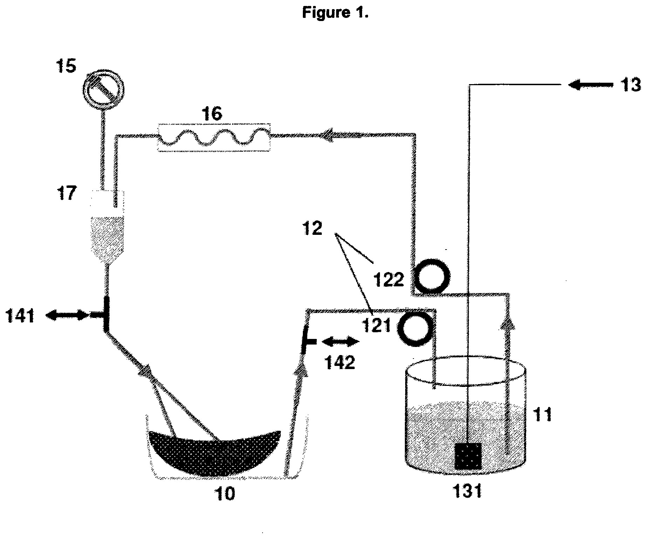

Fig. 1 is a schematic diagram of the organ perfusion system having one pump, which does not form part of the present invention.

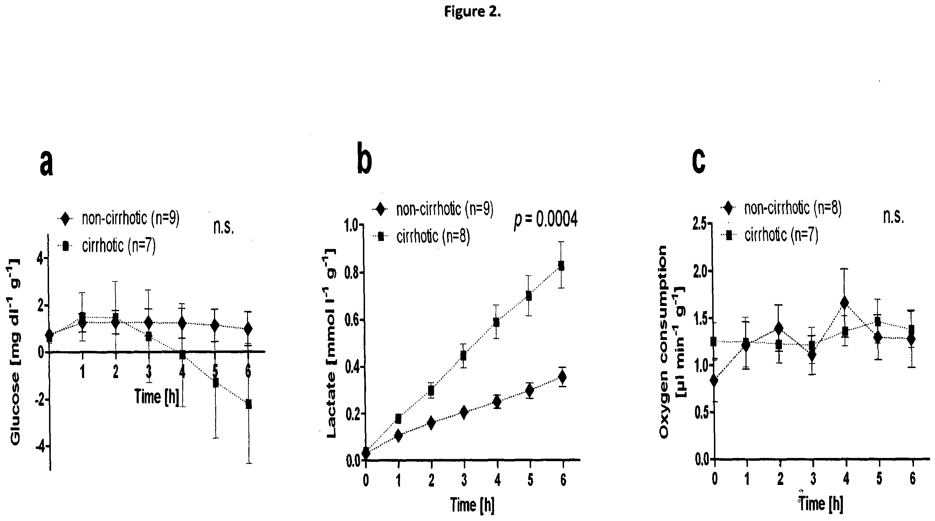

Fig. 2 shows the general hepatic metabolic parameters determined in the system. Glucose (**a**), lactate (**b**) and oxygen (**c**) consumption in non-cirrhotic (n=9) and cirrhotic (n=8) liver specimens were determined in the perfusates. Values were normalized per gram of tissue and are displayed as means ± SEM. Missing data sets are due to mandatory maintenance of the device.

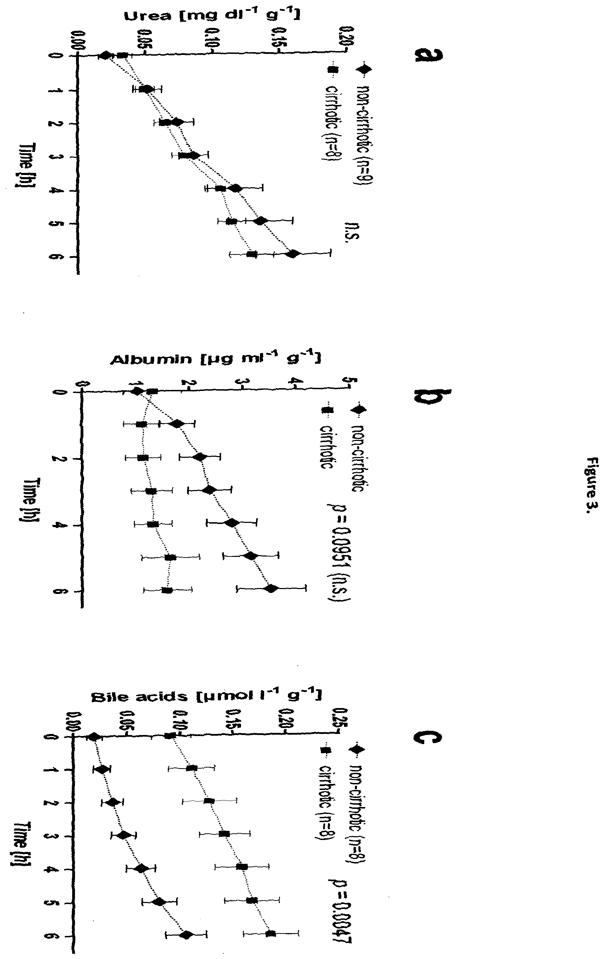

Fig. 3 shows the hepatic synthesis parameters determined in the system. Production of urea (**a**), albumin (**b**) and bile acids (**c**) by non-cirrhotic (n=9) and cirrhotic liver (n=8) specimens were measured. Data were normalized per gram of tissue and are shown as means ± SEM. Grubb analysis identified the missing data set of bile acids as an outlier

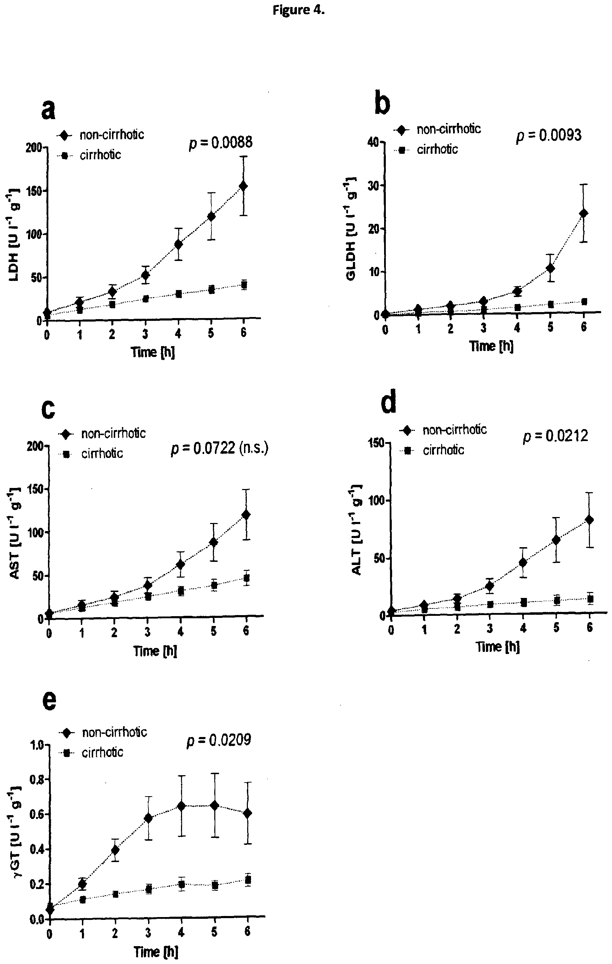

Fig. 4 shows the liver enzymes released during perfusion determined in the system. Relative release of the cell integrity markers LDH (**a**), GLDH (**b**), AST (**c**), ALT (**d**) and yGT (**e**) by non-cirrhotic (n=9) and cirrhotic liver (n=8) specimens. Data were normalized per gram of tissue and are shown as means ± SEM.

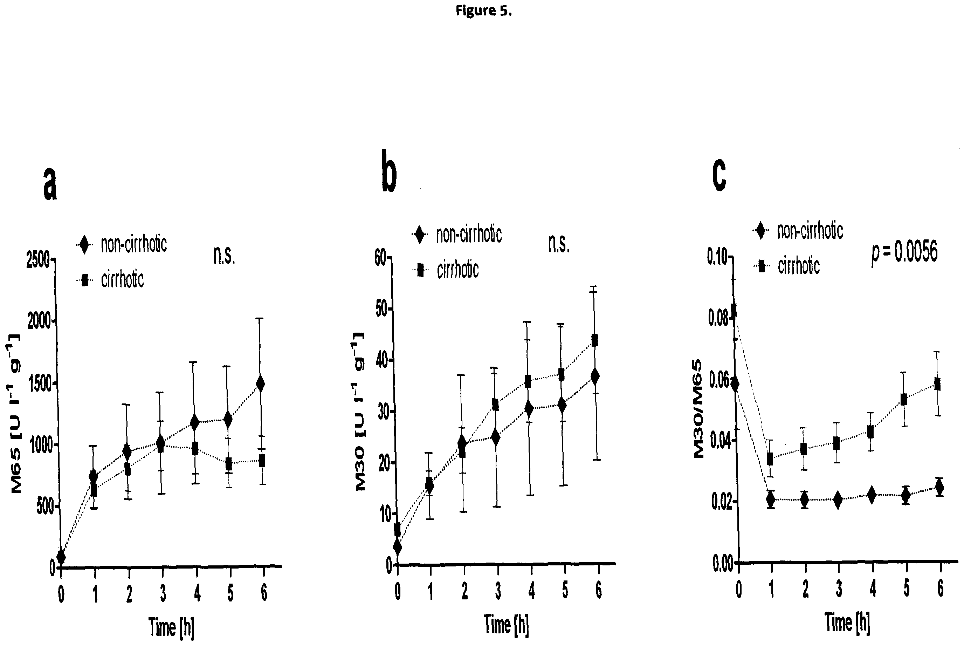

Fig. 5 shows cell-death parameters throughout tissue perfusion determined in the system. Specifically dispayed are marker M65, indicating cell death by necrosis and apoptosis (**a**), marker M30, accounting for apoptosis (b), and the ratio between the M30 and M65 levels (**c**). Values were normalized per gram of tissue and are displayed as means ± SEM.

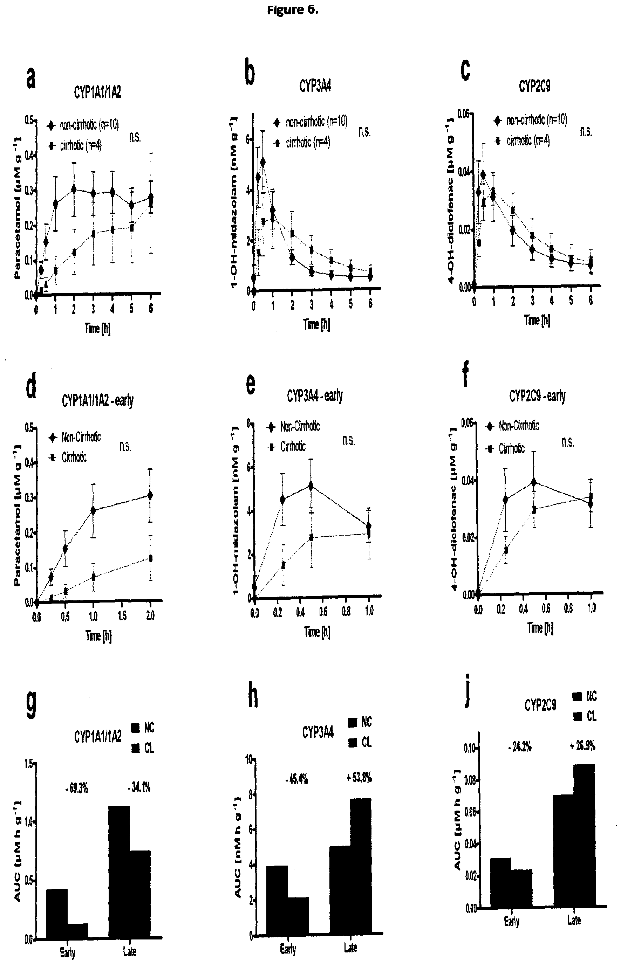

Fig. 6 shows the concentrations of cytochrome P450 (CYP) metabolites (phase-I products) in liver tissue perfusate determined in the system. The activities of CYP1A1/1A2 (**a**), CYP3A4 (**b**) and CYP2C9 (**c**) were assessed by detection of the accordant metabolite concentrations after adding the respective model substrates to the perfusion medium. In order to better illustrate the short time periods during which phase-I reactions occurred, the respective curve sections are displayed separately (**d-f**). The corresponding areas under the curve, representing formation (early) and fade (late) of the respective phase I products, are shown as bar charts (**g-j**). Early vs. late time points were determined by intersection of the graphs, i.e., CYP1A1/1A2 (early = 0-2 h; late = 2-6 h); CYP3A4 and CYP2C9 (early = 0-1 h; late = 1-6 h).

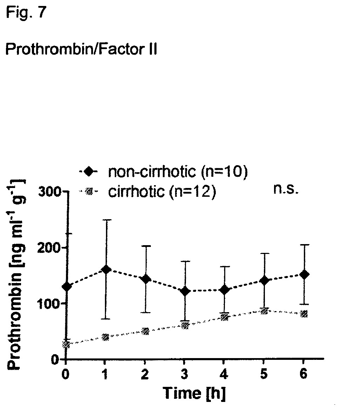

Fig. 7 shows a comparison of the production of prothrombin by non-cirrhotic vs. cirrhotic human liver samples. At all times during perfusion, the hepatocellular synthesis rate of prothrombin was clearly higher in non-cirrhotic liver tissue.

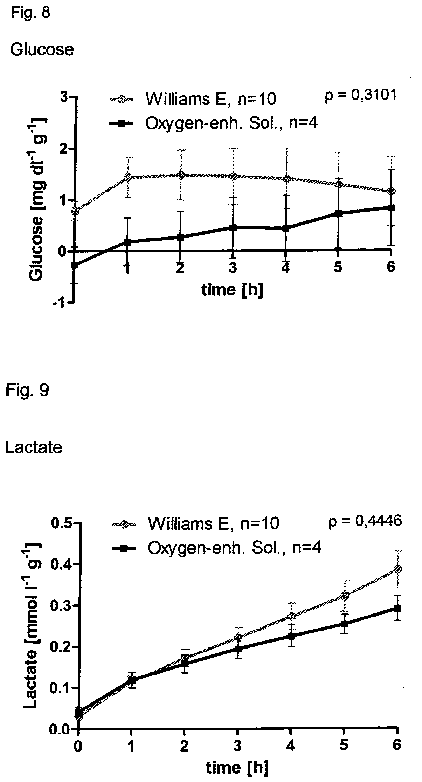

Fig. 8 shows a comparison of the glucose metabolism in liver samples when using Williams E solution on the one hand and an oxygen-enhanced solution on the other hand in connection with the perfusion system. At 390 mg/dL, the glucose content of the oxygen-enhanced solution was approximately twice as high the glucose concentration in Williams E medium (190 mg/dL). The release of glucose was thus significantly lower with oxygen-enhanced solution than in the Williams E condition. Still, the curves approached one another towards the end of the observation period. Due to the high glucose content of the oxygen-enhanced solution, the hepatocytes can preserve their glycogen stores, which is favorable for enabling longer perfusion times.
Fig. 9 shows a comparison of the lactate metabolism in liver samples when using Williams E solution on the one hand and an oxygen-enhanced solution on the other hand in connection with the perfusion system. During the first hour of perfusion, lactate levels showed similar increases for both solutions. However, over the protracted course of six hours the lactate production was lower when employing the oxygen-enhanced solution. This result indicates that using oxygen-enhanced solution impacts positively on the hepatocellular energy status during prolonged perfusion runs.

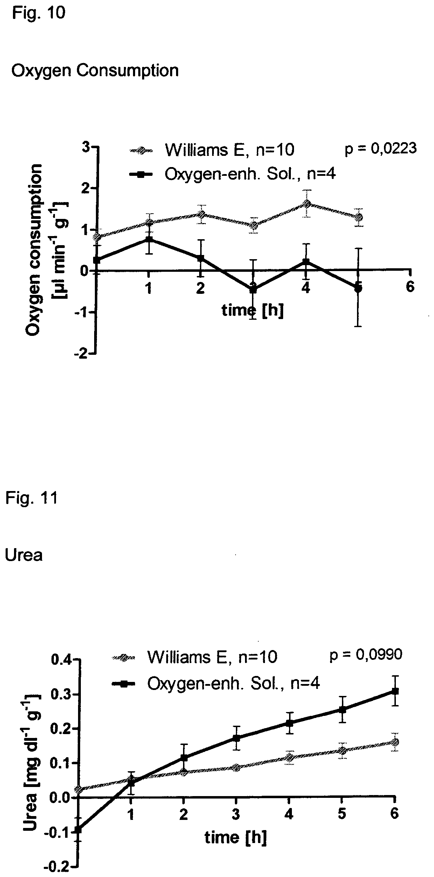

Fig. 10 shows the oxygen consumption as calculated from the difference of the partial pressure of O₂ in the perfusate prior to entry into and directly after exit from the liver tissue. Using the oxygen-enhanced solution, curves showed a significantly lower O₂ consumption when compared to Williams E solution.
Fig. 11 shows a comparison of the urea metabolism in liver samples when using Williams E solution on the one hand and an oxygen-enhanced solution on the other hand in connection with the perfusion system. An urea baseline value of 21 mg/dL was measured when perfusing liver segments with oxygen-enhanced solution. This results in a consumption of urea during the first hour of perfusion. After one hour however, the curve for the oxygen-enhanced solution subtended the flat production profile of Williams E solution and thereupon showed a higher urea synthesis rate than under Williams E conditions.

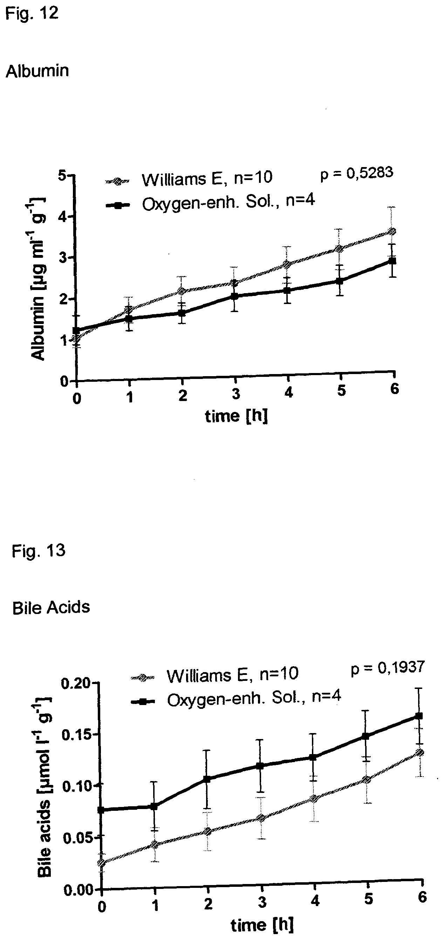

Fig. 12 shows a comparison of the albumin metabolism in liver samples when using Williams E solution on the one hand and an oxygen-enhanced solution on the other hand in connection with the perfusion system. Using an oxygen-enhanced solution, the hepatocellular production of albumin was slightly lower than with Williams E solution. Nevertheless, similar increases of the two curves over the final two hours of perfusion were observed. Thus, hepatic synthesis capabilities were comparable when employing either the Williams E or the oxygen-enhanced solution.
Fig. 13 shows a comparison of the bile acid production in liver samples when using Williams E solution on the one hand and an oxygen-enhanced solution on the other hand in connection with the perfusion system. When employing an oxygen-enhanced solution the hepatocellular production of bile acids was considerably higher than under Williams E conditions. However, the initial reading for the oxygen-enhanced solution already clearly exceeded the value measured in the Williams E condition while the overall courses of both curves ran almost in parallel. Thus, the hourly rates of hepatic bile-acid production were actually comparable with both protection solutions. The higher starting level of bile acids with the oxygen-enhanced solution is due to the higher lipophilicity of this medium. In contrast, in Williams E solution a higher amount of bile acids may stick to cell surfaces or adhere to extracellular matrix components.

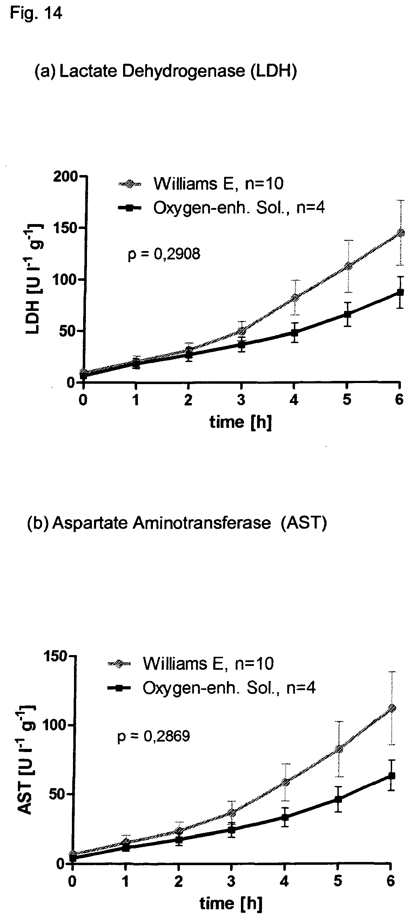

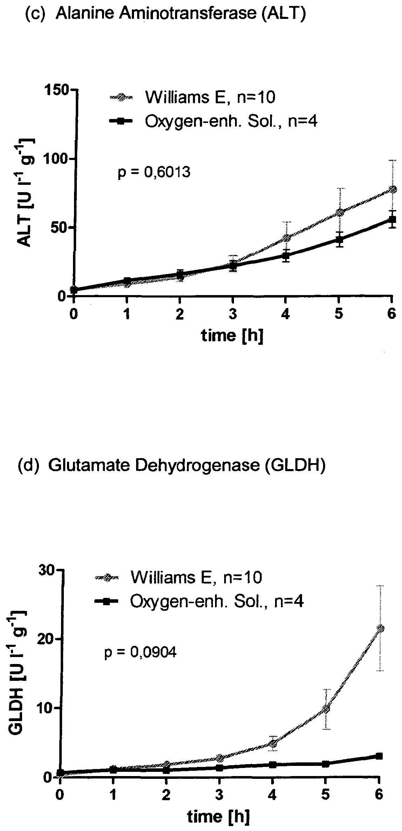

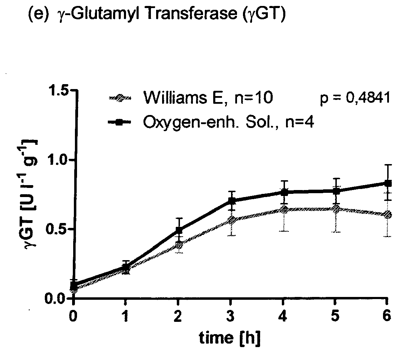

Fig. 14 (a) - (e) describe the results obtained on liver enzymes that are characteristically released upon hepatocellular damage. These data therefore provide insight into the cell-protective performance of the two compared solutions (Williams E solution / oxygen-enhanced solution) for organ protection.
   (a) Lactate dehydrogenase (LDH): Using an oxygen-enhanced solution, the LDH release was considerably less steep than in the Williams E condition. Using the oxygen-enhanced solution, the curve indicates a less much pronounced increase in hepatic cell injury than with the Williams E solution. This protective effect accounted for about one third of improvement after 5 h of perfusion.
   (b) Aspartate aminotransferase (AST): Similarly, the release of AST was considerably lower with an oxygen-enhanced solution than in the Williams E condition. In hepatocytes, AST and LDH values often behave redundantly. This course likewise indicates that the increase in hepatic cell damage is less pronounced when employing an oxygen-enhanced solution. This protective effect accounted for about two fifth of improvement after 5 h of perfusion.
   (c) Alanine aminotransferase (ALT): Until the third hour of measurement, the release of ALT proved to be identical with both perfusion solutions. However, thereafter a lower increase with the oxygen-enhanced solution was measured. Confirming the LDH and AST results, the ALT course also indicated a less pronounced increase in hepatic cell damage when employing the oxygen-enhanced solution. This protective effect accounted for about one fourth of improvement after 5-h perfusion.
   (d) Glutamate dehydrogenase (GLDH): Over the entire observation period, the release of GLDH was significantly lower with the oxygen-enhanced solution than with the Williams E solution. The course of this liver enzyme showed the greatest difference between the two solutions. Importantly, GLDH is mainly released upon very pronounced liver (hepatocyte) damage. The striking differences of the curves therefore not only go along with the above-mentioned results but further indicate a much less severe damage of liver tissue in the presence of an oxygen-enhanced solution.
   (e) Gamma-glutamyltransferase (γGT): Although the release of γGT was slightly higher with oxygen-enhanced solution than under Williams E conditions, the curves showed very similar trends. Since this enzyme is produced in the hepatocytes' bilary pole, this finding suggests increased activity in this peculiar hepatocellular portion. In addition, this result coincides with the increased formation of bile acid when using the oxygen-enhanced solution. Increased bile acid production can be assumed to support prolonged *ex-vivo* liver storage times.

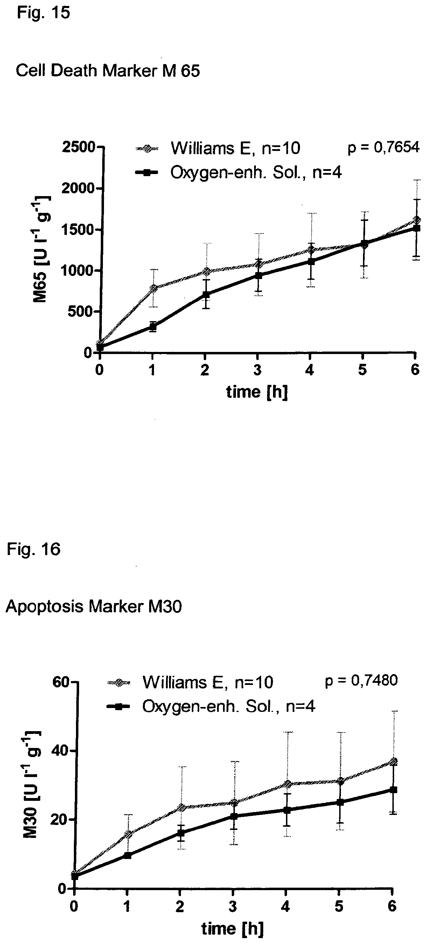

Fig. 15: The marker M65 (a degradation product of cytokeratin) indicates the sum of necrotic and apoptotic cell death. Over the first four hours, M65 values were lower when using the oxygen-enhanced solution as compared to the Williams E condition. At the 5-h and 6-h time points, values of both conditions were almost identical. Using the oxygen-enhanced solution, there appears to be a better protection of perfused liver. This holds true for at least the observation period but likely also beyond this period of time.
Fig. 16: The concentration of the marker M30 (another cytokeratin degradation product different from M65) exclusively correlates with the degree of apoptotic cell death. Using an oxygen-enhanced solution, the extent of hepatocellular apoptosis was slightly lower than with Williams E solution. The Williams-E curve was slightly steeper during the first three hours. Even when selectively viewed from the apoptosis angle, the protection of perfused liver tissue during the 6-h observation period appeared to be improved when employing an oxygen-enhanced solution. Again, the course of the comparative curves suggests that this protective effect would last beyond the 6-h time point when continuing the perfusion process.

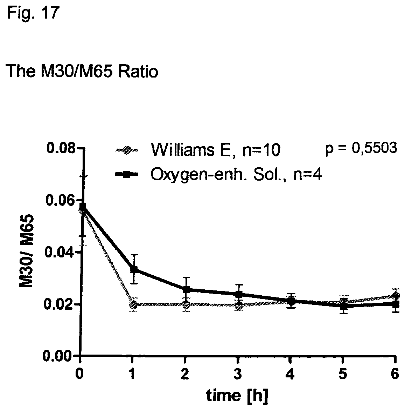

Fig. 17: The M30/M65 ratio indicates the proportion of total apoptotic cell death within the overall cellular demise. Employing an oxygen-enhanced solution, these values were slightly higher than with the Williams E solution. Relative to the overall cell death, the percentage of apoptosis decreased continuously over the perfusion time. When compared realistically, the balancing of both apoptosis and overall cell death shows a clear advantage for combining this perfusion system with the oxygen-enhanced solution.

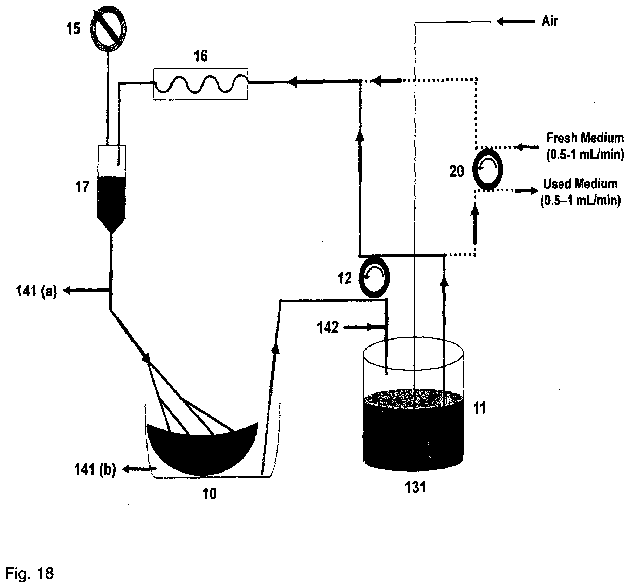

Fig. 18: Schematic representation of the perfusion system according to the invention, wherein the system has been complemented with an additional (i.e. second) perfusion pump. The overall circulation of the perfusate is shown by grey solid lines, while the accessory system extension is represented by dashed grey lines. At a low flow rate, an additional two-headed pump here allows for a continuous influx of fresh perfusion medium and the efflux of spent medium.

### Detailed Description of the Invention and the Preferred Embodiments

The present invention is directed to a novel *ex-vivo* organ perfusion system. The system (1) is designed as an essentially closed circuit *via* circuit tubing for the provision of a constant flow rate, being supplied with nutrients and oxygen, to the human organ explants for at least 6 h, preferably at least 12 h, most preferably about 18-24 h.

Initial steps in the direction of more economic solutions for preserving organ fragments for their investigation were made almost 20 years ago by introducing the culture of precision-cut liver slices and were then developed further (Olinga, P. et al., Toxicology In Vitro, 1997, 12: 77-100; Olinga, P. & G. M. M. Groothuis, 2001, Chapter 12. In: Molema G., Meijer D. K. F. (eds.). Drug targeting. Organ-specific strategies. Wiley Online Library). In the absence of perfusion however, the tissue-resident cells are deprived of vital paracrine factors, which renders the results obtained with such settings questionable. In contrast, it can be anticipated that the introduction of an organ perfusion system that successfully preserves organ architecture and functionality will considerably enhance the quality and the transitory bench-to-bedside potency of research.

In principal, perfusion machines that are currently employed in a context of transplantation can also be used in investigative settings; however, this option is too costly for laboratory investigations, so that much more economic solutions are needed.

The organ perfusion system (1) of the present invention is suitable to be employed for, e.g., therapeutically oriented as well as basic research on diseased and healthy explants so as to further the development of inventive therapeutic approaches to address major disease entities, as well as to further basic research on the physiology and pathophysiology of the organs in health and disease. "Organ" means any transplantable organ of human or animal (e.g. pig, chimpanzee, horse, dog) origin. Examples are liver, kidney, small intestine, lung, spleen, pancreas and heart. "Organ" means the whole organ, specimen, part or segments thereof that maintain their anatomic and functional tissue integrity. "Organ" refers to a human or animal tissue specimen of any size and weight (e.g. 10-1500 g, preferably 50-500 g, and most preferred 100-300 g) that can be reasonably used for basic and pharmacologic research purposes. In case of liver the weight of the whole organ is 1200-1800 g, in case of heart between 280-350g, in case of kidney between 150-200g and in case of lung 1000-1500 g. A "part thereof" is, thus, any piece therefrom so that a part of liver should have a higher weight and be larger than a part of heart or kidney to maintain its functional integrity.

Applications of the present invention include, but are not limited, to the example of studying cellular interactions within the organ and to analyze cell-specific effects of innovative treatments.

The term "innovative treatment" includes, but is not limited to, treatments with novel active pharmaceutical ingredients, nucleic acids (e.g., siRNA species, or antisense or sense DNA species), immunomodulators (i.e., immunosuppressive agents, immunopotentiating or immunoregulatory agents), and lectins (such as lectins that may therapeutically agglutinate viral or bacterial species). The term "innovative treatments" further implies that such active compounds can be applied (i) in their free form, (ii) in encapsulated form within targeted or non-targeted drug delivery systems (such as nanocarriers in their diverse appearances), or (iii) in a form that is chemically linked to a targeting agent. Furthermore, the term "targeting" refers to the specific direction - such as by a molecular anchor structure with specificity for the target molecule(s) - of the respective compound to a certain single cell type, or to a group of cell types that is characterized by distinctive common molecular and/or functional features of its members.

The organ perfusion system (1) comprises a bowl (10) for supporting an organ explant; a vessel (11) for storing the perfusion medium reservoir; a drive propulsion device consisting of two perfusion pumps (12, 20) with two peristaltic heads, respectively, wherein the first pump (12) is configured for the bidirectional transport of the perfusion and the second pump (20) is configured to provide fresh perfusion medium; an oxygen measuring probe for maintaining the required oxygen concentration (13) in said perfusion medium; and a sampling devices for collecting perfusion medium, and for applying nutrients (14).

In another embodiment of the present invention, said bowl (10) of said organ perfusion system (1) is a water bath maintaining the temperature between 33°C and 42°C, more preferably between 35.8 and 37.5°C, and most preferably at about 37.0°C.

In a further embodiment of the present invention, said explant in said bowl (10) of said organ perfusion system (1) is connected *via* at least four branches of the circuit tubing that flow into venous catheters, wherein the perfusion medium efflux is collected in said bowl (10) and re-conveyed to the vessel (11).

Due to the adjustable and set flow rate in the perfusion system of the present invention, it is not necessary to adjust the height of the organ reservoir bowl.

In another embodiment of the present invention, said oxygen measuring probe (13) of said organ perfusion system (1) is a commercially available aquarium pump comprising an airstone (131) for increasing the oxygen concentration of said perfusion medium before said medium is introduced into said explant.

In a more specific embodiment of the present invention, said sampling devices (14) of said organ perfusion system (1) are three-way valves, which are installed before (141) and after (142) said perfusion medium passes said organ explants.

In a further embodiment of the present invention, said sampling device (141) of the organ perfusion system (1) is installed for collecting said perfusion medium before passing the organ and said sampling device (142) are installed for collecting the perfusion medium after passing the organ and for applying nutrients.

In a further embodiment of the present invention (Fig. 18), said sampling device of the organ perfusion system (1) is installed for collecting said perfusion medium before passing the organ (141(a)) and in the bowl (141(b)). Another sampling device (142) is installed close to the medium reservoir for the addition of bolus or buffer solutions (e.g. bicarbonate).

In one embodiment of the present invention, the organ perfusion system (1) further comprises sensing means for measuring and controlling the pressure (15) in said perfusion medium, wherein said sensing means (15) are a manometer, preferably located at or near the bubble trap, and said pressure ranges from 40 to 100 mm Hg. In another embodiment of the present invention, said sensing means (15) of the organ perfusion system (1) measure the pressure of said perfusion medium during the removal of macroscopic air bubbles from said perfusion medium.

In a further embodiment of the present invention, the system (1) further comprises sensing means for measuring and controlling the temperature (16) of said perfusion medium, wherein said sensing means (16) keep the temperature of said perfusion medium between 33°C and 42°C, preferably between 35.8°C and 40°C, most preferably at 40°C. In another embodiment of the present invention, said sensing means (16) measure the temperature of said perfusion medium before said medium is introduced into said degassing means (17), wherein said sensing means (16) are a glass heating coil flowed with water.

In a more specific embodiment of the present invention, the organ perfusion system (1) further comprises degassing means (17) for removing air bubbles that interfere with said system (1), wherein said degassing means (17) remove the air bubbles before said medium is introduced into said organ or organ specimen, respectively.

The first perfusion pump (12) with two peristaltic heads (121, 122) is used for the bidirectional transport of the perfusion medium. Initially, the perfusion medium is oxygenated by a commercially available aquarium pump (13) and routed through a custom-built glass heating coil (16) that is flushed with water kept at 40°C *via* an external heating outlet. At the same time the fluid's pressure is measured manometrically (15) and is to range from 40 to 100 mm Hg. Before entering the explant, air bubbles are removed from the perfusion medium by means of a bubble trap (17). A three-way valve is installed thereafter for collecting perfusion medium before passing the organ explant. The explant is connected *via* four branches of the circuit tubing, ending in venous catheters, and the perfusate efflux is collected in a bowl (10) and re-conveyed to the medium reservoir (11). This connection is furnished with another three-way valve for sampling after passage of the explant, and for applying any agents, targeted or non-targeted drug delivery systems loaded with agents, or agents linked to cell-targeting molecules, respectively. Human explants are maintained at 37°C in a water bath (10).

In accordance with the present invention, the perfusion system has been complemented with an additional (i.e. second) perfusion pump (20) having the same characteristics as the first pump. This second pump is driven to provide fresh medium (30) preferably with a flow rate of 0.5-1 mL/min) into the system and to recycle medium (40) with a flow rate of 0.5-1 MI/min). The objective in employing the second pump is to enable a continuous influx of fresh perfusion medium in order to permanently supply a perfused organ or organ sample with the appropriate amount of nutrients. The results demonstrate (i) that this complementation allows for perfusion times longer than six hours and (ii) that the overall physiological parameters measured throughout the course of perfusion can be improved. Such a perfusion system with two pumps is shown in Fig.18. As realized in this two-pump containing system, the presence of two pump heads allows for a continuous circulation (pump #1; (12), plus a continuous feeding of the organ or organ segment with fresh perfusion solution (pump #2; (20). This allows for a permanent optimal supply of the organ or organ segment with essential nutrients. This system is an "essentially closed system" which means that perfusion medium is supplied and is removed, if necessary, but the system is otherwise closed.

Suitable pumps for the circulation (pump #1) are e.g. Masterflex, flow rate 1-100 rpm (model # 77521-57) and for the fresh media supply (pump #2) are e.g. Masterflex, flow rate 10-600 rpm (model # 7523-27), both Cole-Parmer, Vernon Hills, IL, USA (www.coleparmer.com). Pumps from other suppliers that enable the required flow rates can also be employed.

In the following paragraphs, a particular preferred embodiment in terms of a perfusion system for liver explants is described. The person skilled in the art, however, will recognize that all transplantable organs or parts thereof, e.g. kidney, heart, lung or small intestine, may be subjected to the perfusion system in a similar manner. The description of the perfusion system as a liver perfusion system shall not be construed as any limitation to said organ.

Particular applications of the present invention include the study of cellular interactions within the liver, wherein cellular interactions comprise interactions between nonparenchymal non-immune cells (liver sinusoidal endothelial cells, cholangiocytes, hepatic stellate cells) and immune cells (Kupffer cells, dendritic cells, NK and NKT cells, as well as T lymphocytes) as well as parenchymal liver cells (i.e., hepatocytes).

In a particular preferred embodiment, the system of the present invention preserves the hepatic architecture when perfusing liver explants, such as liver specimens, liver segments, split liver transplants, or whole-organ liver transplants derived from patients, healthy organ donors or animal sources, which maintains the anatomic and functional tissue integrity during the perfusion of the human or animal liver explants for at least six hours. It is preferred that the liver explants have a weight of up to 1500-1800 g (whole liver) or any part/segment thereof (e.g. 10-1200 g).

Furthermore, another embodiment of the present invention relates to a method (i) of preserving human liver explants, (ii) of therapeutically oriented research or basic research on human liver explants derived from patients or healthy organ donors, (iii) of identifying differences between human liver explants derived from patients and healthy organ donors that most prominently pinpoint or characterize the infection status, pathophysiology, responsiveness to an innovative treatment, and/or safety of said innovative treatment by determining, if applicable, the clearance of, e.g., the relevant infectious agent (e.g., virus, bacterium, protozoon, etc.) in healthy vs. diseased liver tissue before and after treatment, the tissue's physiological capacity (e.g., by determining liver enzymes and functional parameters (e.g., hepatocellular synthetic potential and detoxifying potential), the immunological capacity (such as the induction, suppression or regulation of desirable or undesirable immune responses, respectively), and/or the integrity of the tissue (such as by measuring necrotic and apoptotic cell-death parameters), (iv) of pinpointing hitherto unidentified pathophysiological and/or immunopathological processes involved in the development and exacerbation of human liver diseases, or (v) of enhancing the quality of physiological, pathophysiological, immunological, immunopathological, pharmacodynamic, pharmacokinetic, pharmacogenomic and toxicological analyses on healthy and diseased human liver explants, by applying the organ perfusion system (1) of the present invention.

In detail, some embodiments are directed to the organ perfusion system (1) for perfusing human or animal liver explants, such as liver specimens or liver segments that maintain their anatomic and functional tissue integrity during perfusion for a period of at least six hours. The term, "liver specimen", refers to a human or animal liver tissue specimen of any size and weight (e.g. 10-1500 g, preferably 50-500 g, most preferred 100-300 g) that can be reasonably used for basic and pharmacologic research purposes; the term, "liver segment", refers to any of the separate anatomic entities of the human liver as defined by Couinaud's classification (Rutkauskas, S. et al., Medicina (Kaunas), 2006, 42: 98-106) or of analogous separate anatomic entities of livers obtained from animal sources.

Some embodiments are directed to the organ perfusion system (1) for perfusing human liver explants, such as split liver transplants or whole-organ liver transplants derived from healthy organ donors or animal sources under conditions allowing for the improved and prolonged preservation of anatomic and functional tissue integrity, i.e., for at least six hours. The term, "split liver transplant", refers to a functionally intact partial liver graft that is prepared as known to the surgical art from a complete functionally intact organ excised from a donor for the purpose of providing as many as possible different organ recipients with a split liver transplant that is able to regenerate by itself to a complete functional liver; this method was developed against the background of a steadily increasing need for organ transplants due to the lack of sufficient numbers of donor organs. The term, "whole-organ liver transplant", refers to the complete functionally intact organ excised from a donor as known to the surgical art for the purpose of providing one single recipient with the entire organ in case the method of split organ transplantation cannot be applied. Both split and whole-organ liver transplants are employed in context of life-saving organ transplantation (Broelsch, C. E. et al., Ann. Surg., 1990, 212: 368-375). In a specific embodiment, the organ perfusion system (1) of the present invention is suitable to be employed for maintaining split or whole-organ liver transplants so as to enable to preserve such transplants prior to their implantation into recipients (i) under improved physiological conditions wherein "improved conditions" are defined as the maintenance of organ-specific parameters in ranges that more closely resemble the organ's physiological ranges than is enabled by current organ perfusion systems; and/or (ii) under economically more attractive conditions than are enabled by current organ perfusion systems; and/or (iii) for extended periods of time, i.e. for at least six hours, as are, for example, required because of long transportation routes. It is anticipated that the organ perfusion system (1) of the present invention will perform these vital and life-saving tasks at lower cost than currently available, and it thus is also anticipated that said system will by highly competitive in a health market whose ever-increasing economic requirements place increasing burdens on the society.

The current invention presents an economic essentially closed-circuit perfusion system that maintains human or animal explants between 10-1800 g of weight structurally and functionally intact for at least six hours. In order to set the frame for enabling dependable predictions as to the functionality of healthy and diseased human liver explants, the performance of non-cirrhotic and cirrhotic specimens sampled from livers explanted in the course of orthotopic liver transplantation was compared. As a result, the employment of the organ perfusion system (1) of the present invention enhances the investigational and predictive power for human liver explants that are introduced and subsequently maintained under physiological or pathophysiological conditions, or under therapeutically modulated conditions provided by the novel perfusion system. In fact, the determined benchmark parameters (i.e., the standard clinical and research parameters for determining the functional and anatomic integrity of the human liver, such as liver enzymes, specific synthetic capabilities, and necrotic and apoptotic cell-death parameters) indicate that the organ perfusion system (1) of the present invention creates an environment that mimics the hepatic *in-vivo* situation as closely as possible. The present invention is thus most useful for both academic as well as pharmaceutical research and holds a strong economic advantage when compared to perfusion systems usually employed in a context of organ transplantation.

Some embodiments are directed to methods of identifying characteristic differences between human liver explants derived from patients and healthy organ donors, wherein the differences are selected from the group consisting of parameters of general metabolic and specific synthetic hepatic capabilities, i.e. liver-specific parameters, liver enzymes and cell-death markers, as well as indicators of phase-I and phase-II transformations. Therefore, human liver specimens, such as samples of non-cirrhotic liver (NC; from patients with liver-metastasized neoplasms) and cirrhotic liver (CL; from patients with hepatitis C, primary bilary cirrhosis or ethanol toxicity) scrutinized with the organ perfusion system (1) of the present invention were functionally characterized for these differences. The term "general metabolic parameters" or rather "general metabolic capabilities and capacities" include glucose, lactate and O₂ or rather glucose metabolism, lactate production and oxygen consumption; "liver specific parameters" or rather "liver specific capabilities" include urea, albumin and bile acids or rather the production of urea, albumin and bile acids; "liver enzymes" include the release of parameters indicating liver-specific tissue damage, such as aspartate aminotransferase (AST), alanine aminotransferase (ALT), lactate dehydrogenase (LDH), glutamate dehydrogenase (GLDH), γ-glutamyl transferase (yGT); overall and apoptotic "cell-death markers" include markers indicating apoptotic and necrotic cellular demise, such as M65 *vs.* M30; "indicators of phase-I/phase-II transformations" include cytochrome P450 enzymes, cytochrome P450 (CYP) metabolites of phenacetin (CYP1A1/2), midazolam (CYP3A4) and diclofenac (CYP2C9), and metabolites of paracetamol, 1'-hydroxymidazolam and 4'-hydroxydiclofenac.

Using the organ perfusion system (1) of the present invention for, e.g., the perfusion of human liver explants, the liver-specific parameters, liver enzymes and cell-death markers, as well as indicators of phase-I and phase-II transformations of the human liver explants closely resemble physiological and pathophysiological characteristics of patients with NC (i.e., approximating the healthy state of the liver) and CL (i.e., paralleling the characteristic changes in liver physiology in different disease entities that lead to the cirrhotic alteration of the liver).

More specifically, significantly stronger lactate generation and bile acid production were seen in CL. Both factors are well known to be elevated in liver injury. Cirrhosis is associated with cell death and impaired liver function, leading to elevated lactate and bile acid concentrations, respectively (Purucker, E. et al., Am. J. Physiol. Renal Physiol., 2002, 283: F1282-F1289) In CL, glucose production, although increased within the first hours of perfusion compared to NC, later turned into glucose consumption while NC retained a rather constant production rate. Over time, common parameters of liver damage (AST, ALT, LDH, GLDH, γGT) clearly increased in NC in contrast to only being slightly elevated in CL. This latter finding corresponds well to the clinical situation, where chronic liver damage gradually exhausts cell numbers thus steadily diminishing the release of liver enzymes. This sharply contrasts with sudden intense damage of healthy livers, as in acute liver failure (Bechmann, L. P. et al., Liv. Int., 28: 713-716). It has been shown that high ALT and AST values are associated with better outcome of acute liver failure. The *ex-vivo* data obtained with the disclosed system revealed a similar pattern. These and further findings summarized below suggest that the employment of this device to study and therapeutically modulate hepatological problems *ex vivo* may be of great relevance due to the increased reliability of results obtained with this system, which may be achieved at reduced expenditures when compared with earlier testing systems.

Furthermore, some embodiments are directed to a method of pinpointing hitherto unidentified pathophysiological and/or immunopathological processes involved in the development and exacerbation of major liver diseases by applying said organ perfusion system (1) of the present invention. The term "major liver diseases" includes, but is not limited to, steatohepatitis, non-alcoholic fatty liver disease (NAFLD; i.e., the liver disease entity that develops at the most rapid pace within the countries of the western world as well as within those countries that have adapted a westernized life-style) (Ertle, J. et al., Int. J. Cancer, 128: 2436-2443) the viral hepatitides caused by the hepatitis B, C, and D viruses (HBV, HCV, HDV) (Geller, S. A., Clin. Liver. Dis., 2002, 6: 317-334) and hepatocellular carcinoma (HCC; i.e., the most abundant type of cancer of the liver that mostly develops as a result of HBV and/or HCV infection and/or as a result of NAFLD-associated liver fibrosis and cirrhosis) (Ertle, J. et al., Int. J. Cancer, 128: 2436-2443). Consequently, further embodiments are directed to methods of identifying novel modes of treatment that may beneficially interfere with, or inhibit, pathophysiological and/or immunopathological processes involved in the pathology of the aforementioned or of other liver diseases that are to be identified by employing the disclosed organ perfusion system (1).

The before utilized technology was obviously limited by the availability of appropriate tissue samples, i.e., of accessible human liver explants, perfusion efficiency and supply of nutrients and oxygen to the liver cells. First, only few research groups have access to sufficiently large liver specimens from patients. Moreover, resections and transplantations may not always be planned ahead and the disposability of liver tissue to some extent depends on a quick response by the laboratory personnel. The same applies to samples utilized for isolating primary cells, which are needed for comparable systems (e.g., bioreactors) that employ primary hepatocytes. Second, perfusion never reached all cells within the tissue under the conditions employed. Trypan blue injection showed that, roughly, 50-80% of the tissue was reached. The fact that all data were normalized to the liver samples' weights and were consistent within the groups (NC *vs.* CL) with rather small standard deviations suggests that a roughly comparable fraction, proportional to the sample weight, was reached with the perfusate before. Finally, oxygenation of the perfusate and the supply with nutrients were not within optimal ranges - i.e., 50-60 µl min⁻¹ g⁻¹ of oxygen consumption in vivo (Henryk Dancygier, Klinische Hepatologie. Springer 2003). When the liver samples of the present disclosure - i.e., the human liver explants - were perfused and characterized for a period of six hours, they showed a trend towards cell damage at the later points in time. However, based on this piloting perfusion system of the present disclosure it is anticipated that improved oxygen transport and/or delivery as well as a continuous supply of glucose and other nutrients will further prolong the survival time of perfused liver samples. In a particular preferred embodiment, the perfusion system is designed as an essentially closed circuit providing a constant flow rate, being supplied with nutrients and oxygen, to liver samples of 10-1500 g (for a schematic drawing, see Figure 1 and 18). It is within the knowledge of a skilled person to adjust and maintain a constant flow rate. A pump drive with two peristaltic heads is used for the bidirectional transport of the perfusion medium. Medium is oxygenated by a commercially available aquarium pump and routed through a custom-built glass heating coil flowed with water kept at about 40°C *via* an external heating outlet. The fluid's pressure is measured manometrically and ranges from 40 to 100 mm Hg. Before entering the liver sample, the perfusion fluid gets rid of air bubbles, e.g. by means of a bubble trap. A three-way valve is installed thereafter for collecting perfusion medium before passing the liver sample. The specimen is connected *via* four branches of the circuit tubing, ending in venous catheters, and the perfusate efflux is collected in a bowl and re-conveyed to the medium reservoir. This connection is furnished with another three-way valve for sampling after liver passage, and for applying any agents. Liver specimens are maintained at 37°C in a water bath.

In a preferred embodiment the experimental perfusion is performed as follows: First, the liver piece is connected to the perfusion circuit via 2-4 cannulas - dependent on available vessels - adhered into portal or central veins by a tissue adhesive. Second, the surgical cutting area is sealed. The liver piece is then rinsed with approx. 500 mL of Hank's balanced salt solution supplemented with 20 mM 4-(2-hydroxyethyl)-1-piperazineethanesulfonic acid (HEPES; PAA) and 2 U/mL heparin for removing residual blood, whereupon exchanging the perfusion medium to 250 mL Williams' medium E containing 20 mM HEPES. The first 50 mL volume of the perfusate is discarded for removing as much residual blood as possible and to allow for a consistent zero point. The circuit is closed by placing the effluent tubing into the medium reservoir (Figure 1). Time measurement starts after few initial samplings; flow rates are adjusted to obtain an appropriate pressure of about 50 mmHg (i.e., 40 or 50 mL/min). The perfusion is run for 6 h, and perfusate samples are collected at hourly intervals. For determination of CYP activity, additional samples are taken at 0.25 and 0.5 h. Glucose and lactate concentrations as well as pH and pO2 (general metabolism) are measured instantly on a blood gas analyzer and the pH is adjusted to 7.3-7.4 by adding 1-2 mL of 8.4% sodium bicarbonate solution to the perfusate as needed. When small (< 20 g) pieces of liver are employed, the initial pH turns often alkaline; in these cases 2-3 mM of sodium dihydrogen phosphate are added. In case the glucose concentration decreases below 40 mg/dL, the perfusate is supplemented with 0.75-1.0 mL of a 40% glucose solution corresponding to 150-200 mg/dL glucose. At termination of the experiment, 2 mL of trypan blue are added and perfuses for 10 min to allow for evaluation of perfusion efficiency and identification of the perfused tissue areas. Liver specimens are finally cut into 1-cm slices, and areas of interest are either stored in 4% paraformaldehyde for paraffin embedding or frozen in liquid nitrogen prior to preparing cryosections.

As shown by the inventors in the Examples, the rapid phase-I conversion of three human-relevant CYP substrates clearly proves that the hepatocytes of the perfused liver are functionally active and perform physiological detoxification reactions. The fast consumption of the phase-I metabolites of midazolam and diclofenac further indicates the hepatocytes' intact phase-II metabolism. Both biotransformation reactions are more pronounced in NC than in CL specimens. Subject to taking the low CL sample into account, these results illustrate the more dysfunctional state for hepatocytes in a cirrhotic environment. When CYP results from NC tissue are compared to a similar CYP testing setup on bioreactor-cultured primary human hepatocytes, the bioreactor cultures exhibits a more than two-fold slower phase-I formation and performs phase-II reactions to a much lower extent on these model substrates (Zeilinger, K. et al., Tissue Eng. Part C Methods, 2011: 17: 549-556, Mueller, D. et al., J Tissue Eng Regen Med., 2011, 5(8): e207-18).

The current systems for evaluating candidates for active pharmaceutical ingredients generally employ single-type cell cultures or animal models (Olinga, P. et al., Toxicology In Vitro, 1997, 12: 77-100; Gebhardt, R. et al., Drug Metab. Rev., 2003, 35: 145-213). While both of which continue to prove their value, they also have their limitations. Cell lines undoubtedly are altered variants of their healthy counterparts, and even humanized animal models have numerous drawbacks due to the species-related dissimilarities in (patho)physiology, infection modes, and/or pharmacological metabolization and toxicity. Such limitations may be considerably mitigated by employing a suitable system for perfusing human organs that can even mimic pathological conditions, as is enabled by the disclosed perfusion system. In this sense, a crucial advantage of the organ perfusion system (1) of the present disclosure is the presence of all cell species that are retained within an organ's native or pathologically altered scaffold and structure.

Finally, some embodiments are directed to methods for continuously enhancing the organ perfusion system (1) of the present disclosure, such as by simplifying the handling, or rather improving the ease of handling, by optimizing the oxygen and nutrient supply, and by establishing a baseline characterization of specimens derived from different disease entities that is increasingly reliable. Further embodiments are also directed to methods of adapting other methodologies to the organ perfusion system (1) of the present disclosure so as to continuously enhance its informative power to predict organ-specific toxicities and real-life efficacies of investigative new drugs (INDs). As one powerful example that embraces a most recent novel approach, the organ perfusion system (1) of the present disclosure may be complemented with a cutting-edge multi-gene expression signature that excellently predicts organ toxicity, e.g. hepatotoxicity (Cheng, F. et al., J. Theor. Biol., 2011, 290: 27-36). The implementation of such an improved system is able to identify undesired or dangerous phase-I and/or phase-II metabolites of INDs. Importantly, such enhanced toxicity results as well as the identification of IND-specific efficacies can be compared and normalized without further exhausting the overstrained and indispensable transplant supply. This, again, may positively reflect upon society's healthcare economics.

In a preferred embodiment the organ perfusion system is used in connection with an oxygen-enhanced solution. This oxygen-enhanced solution is preferably a serum-free physiological solution for the organ preservation that enables enhanced oxygen delivery to perfused organs and tissues. An example for a suitable oxygen-enhanced solution is available from Oncoscience AG (Wedel, Germany) under the name "Oncostore". Such an oxygen-bearing physiological serum-free solution contains inorganic salts, amino acids, vitamins, cholesterol, adenosine and a low protein concentration.

When compared with a standard solution for organ preservation, e.g. Williams E solution, the employment of an oxygen-enhanced solution allows for a clear improvement of functional cellular parameters of normal tissue in the *ex-vivo* perfusion system of the present disclosure.

As shown in the following examples and figures 8-17 these cellular parameters are in the case of liver (but the results apply to other organs and tissues accordingly): Lactate as an indicator for the hepatocellular energy status; increased urea production to support prolonged organ viability; and enhanced glucose metabolism, which is favorable for enabling longer perfusion times. The results in Fig. 14 (a)-(e) indicate a much less severe damage of liver tissue in the presence of an oxygen-enhanced solution.

As these improvements are not marginal, combining the perfusion system of the present disclosure with an oxygen-enhanced solution may be considered as preferable.

As a clear advantage resulting from such improvements, the enablement of significantly prolonged perfusion times is expected to decisively advance, and to enable, the continued development of a novel whole-organ protection system. In this regard, prolonged perfusion times have the clear advantage that organs to be transplanted can be kept viable and functionally intact over prolonged times, which gives mediators of organ allocation, such as Eurotransplant, more time to look for the best donor/recipient matches and would enable to transport the organ/tissue over longer distances. Presently, organs/tissues have to be transplanted within 4-6 hours after surgical sampling. Even enhanced by the problem of continuing donor organ shortage, this very small window reduces the transplantation success rates as opposed to success rates that may be achieved in the presence of improved frame conditions. The results of the following examples show that combining the system illustrated in figure 1 with a suitable protection solution allows to further increase the system's inherent superior performance. Depending on the respective organ, such combinations may be offered as novel solutions for preserving organs for transplantation surgery. Besides its excellent physiological performance, this system can be produced and offered at significantly lower costs than current systems dominating the market.

### Examples

The following Examples relate to the organ perfusion system illustrated in figure 1, which does not form part of the present invention.

### Example 1: General Methods

Patients and liver samples. All patients provided written informed consent according to the Helsinki declaration of 1995, and the study protocol conformed to the guidelines of the ethics committee of the University Hospital Essen. Non-cirrhotic liver tissue (NC, n=9) was obtained from liver portions that had been partially resected due to different entities of liver-metastasized neoplasms (Tab. 1), with an ample circumference of surrounding healthy tissue.

**Table 1. General characteristics of patients and liver samples.**

| **Number** | **Surgical intervention** | **Underlying disease** | **Gender / Age** | **Sample weight [g]** |
|---|---|---|---|---|
| NC-1 | Right side hemihepatectomy | Klatskin tumor | f / 61 | 55 |
| NC-2 | Left side hemihepatectomy | Hemangioma | f / 38 | 18 |
| NC-3 | Right side hemihepatectomy | Klatskin tumor | f / 60 | 70 |
| NC-4 | Left side partial resection | Metastasized colon carcinoma | f / 75 | 19 |
| NC-5 | Right side hemihepatectomy | Metastasized colon carcinoma | m / 43 | 45 |
| NC-6 | Right side hemihepatectomy | Metastasized rectal carcinoma | m / 52 | 55 |
| NC-7 | Right side hemihepatectomy | Metastasized soft palate carcinoma | m / 55 | 54 |
| NC-8 | Explantation | hepatocellular carcinoma | f / 59 | 56 |
| NC-9 | Right side hemihepatectomy | Cholangiocellular carcinoma | m / 70 | 55 |
| CL-1 | Explantation | Hepatitis C | f / 61 | 40 |
| CL-2 | Explantation | Hepatitis C | m / 50 | 25 |
| CL-3 | Explantation | Hepatitis C | m / 51 | 48 |
| CL-4 | Explantation | Ethanol toxicity | m / 48 | 42 |
| CL-5 | Explantation | Hepatitis C | m / 61 | 55 |
| CL-6 | Explantation | Hepatitis C | m / 66 | 55 |
| CL-7 | Explantation | Primary biliary cirrhosis | f / 51 | 32 |
| CL-8 | Explantation | Hepatitis C | m / 61 | 38 |

While the diseased tissue was forwarded to the pathologist, adjacent unaffected tissue was transferred to the laboratory, stripped of any remnants of macroscopically visible pathologic areas, and then connected to the perfusion system (see below). Cirrhotic liver tissue (CL, n=8) was mostly derived from the left lobe of whole liver explants in the course of complete orthotopic liver transplantation in patients with hepatitis C, primary bilary cirrhosis or ethanol toxicity.

Liver perfusion system. The perfusion system was designed as a closed circuit providing a constant flow rate, being supplied with nutrients and oxygen, to liver samples of 20-50 g (for a schematic drawing, see Figure 1). A pump drive with two peristaltic heads (Masterflex *via* Novodirect, Kehl, Germany) was used for the bidirectional transport of the perfusion medium. Medium was oxygenated by a commercially available aquarium pump (Hagen, Holm, Germany) and routed through a custom-built glass heating coil flowed with water kept at 40°C *via* an external heating outlet (Julabo, Seelbach, Germany). The fluid's pressure was measured manometrically (VBM Medizintechnik, Sulz, Germany) and ranged from 40 to 100 mm Hg. Before entering the liver sample, the perfusion fluid was degassed by means of a bubble trap (Stem Cell Systems, Berlin, Germany). A three-way valve was installed thereafter for collecting perfusion medium before passing the liver sample. The specimen was connected *via* four branches of the circuit tubing, ending in venous catheters, and the perfusate efflux was collected in a bowl and re-conveyed to the medium reservoir. This connection was furnished with another three-way valve for sampling after liver passage, and for applying any agents. Liver specimens were maintained at 37°C in a water bath.

Experimental perfusion. First, the liver piece was connected to the perfusion circuit via 2-4 cannulas - dependent on available vessels - adhered into portal or central veins by the tissue adhesive, Histoacryl (Braun, Melsungen, Germany). Second, the surgical cutting area was sealed with Histoacryl. The liver piece was then rinsed with approx. 500 mL of Hank's balanced salt solution (HBSS; PAA, Cölbe, Germany) supplemented with 20 mM 4-(2-hydroxyethyl)-1-piperazineethanesulfonic acid (HEPES; PAA) and 2 U/mL heparin (Ratiopharm, Ulm, Germany) for removing residual blood, whereupon exchanging the perfusion medium to 250 mL Williams' medium E (Biochrom, Berlin, Germany) containing 20 mM HEPES. The first 50 mL volume of the perfusate was discarded for removing as much residual blood as possible and to allow for a consistent zero point. The circuit was closed by placing the effluent tubing into the medium reservoir (Figure 1). Time measurement started after few initial samplings; flow rates were adjusted to obtain an appropriate pressure of about 50 mmHg (i.e., 40 or 50 mL/min). The perfusion was run for 6 h, and perfusate samples were collected hourly. For determination of CYP activity, additional samples were taken at 0.25 and 0.5 h. Glucose and lactate concentrations as well as pH and pO2 (general metabolism) were measured instantly on the blood gas analyzer ABL715 (Radiometer, Willich, Germany), and the pH was adjusted to 7.3-7.4 by adding 1-2 mL of 8.4% sodium bicarbonate solution (Braun) to the perfusate as needed. When small (< 20 g) pieces of liver were employed, the initial pH turned alkaline; in these cases 2-3 mM of sodium dihydrogen phosphate (Sigma-Aldrich, Munich, Germany) were added. In case the glucose concentration decreased below 40 mg/dL, the perfusate was supplemented with 0.75-1.0 mL of a 40% glucose solution (Braun, Melsungen, Germany) corresponding to 150-200 mg/dL glucose. At termination of the experiment, 2 mL of trypan blue (Sigma-Aldrich) were added and perfused for 10 min to allow for evaluation of perfusion efficiency and identification of the perfused tissue areas. Liver specimens were finally cut into 1-cm slices, and areas of interest were either stored in 4% paraformaldehyde for paraffin embedding or frozen in liquid nitrogen prior to preparing cryosections.

Biochemical parameters and cell death markers. For determining biochemical parameters, perfusate samples were stored at 4°C overnight and then transferred to the Dept. of Clinical Chemistry and Laboratory Medicine (University Hospital Essen). Activities of ALT, AST, yGT, GLDH, and LDH were determined on the ADVIA 1800 Chemistry System (Siemens Healthcare Diagnostics, Eschborn, Germany) using the respective assay cassettes. Human albumin was quantified with the AssayPro Human Albumin ELISA kit (St. Charles, MO, USA). For comparability, measurements were normalized to the per-gram weight of the different liver specimens. Glucose turnover was calculated by subtracting the glucose content of the culture medium from the perfusate concentration. Positive values were defined as production or release of a compound while negative values were assumed to reflect consumption - except for oxygen, whose consumption was calculated by determining the partial pressure deviation in the perfusate before entering and after exiting the liver specimen (in mm Hg), multiplied by the flow rate (in dL/min) and the Henry constant (0.3 mL x dL⁻¹ x mm Hg⁻¹). The overall cell death and apoptosis rates were determined by means of the M65 and M30 ELISA kits (Peviva, Bromma, Sweden) according to the manufacturer's instruction.

Acitivity of cytochrome P450 (CYP). The CYP activity was assessed by adding a CYP substrate cocktail consisting of phenacetin (CYP1A1/2), midazolam (CYP3A4) and diclofenac (CYP2C9) to the medium reservoir directly before starting the time measurement of the respective experiment. Phenacetin and diclofenac (both from Sigma-Aldrich) were prepared as stock solutions of 80 and or 40 mmol/L, respectively, in dimethyl sulfoxide (DMSO), and were diluted in culture medium to final concentrations of 26 µM or 9 µM, respectively, in the perfusion circuit. Midazolam was provided as an aqueous solution (Dormicum®, Roche Pharma, Grenzach-Wyhlen, Germany) at 13.8 mM (= 5 mg/mL) and diluted to a perfusion concentration of 3 µM. Samples of 200 µl were taken from below the bubble trap at the indicated time points in the experimental procedure and stored at -20°C until further processing. The metabolites paracetamol, 1'-hydroxymidazolam and 4'-hydroxydiclofenac were analyzed by liquid chromatography/mass spectrometry. The liquid chromatography system consisted of a HTS PAL injector (CTC Analytics, Zwingen, Switzerland) combined with an HP 1100 LC binary pump and column oven (Agilent Technologies Deutschland, Waldbronn, Germany). The separation was performed on a reversed-phase HyPurity C18 analytical column (50×2.1 mm, 5 µm; Thermo Scientific, Runcorn, UK) with a HyPurity C18 precolumn at 40°C and with a flow rate of 750 µL/min. The mobile phases consisted of 0.1% (v/v) formic acid in 5% acetonitrile (A) and 0.1% (v/v) formic acid in 95% acetonitrile (B). Detection was performed with a triple quadrupole mass spectrometer (API4000), equipped with an electrospray interface (Applied Biosystems/MDS Sciex, Concorde, Canada). Instrument control, data acquisition and data evaluation were performed using Applied Biosystems/MDS Sciex Analyst 1.4 software.

Statistical analyses. Measured values, areas under-the-curves (AUCs), Pearson correlations and two-way ANOVA statistical analyses were calculated and graphically displayed by GraphPad Prism 5 (GraphPad Software, La Jolla, CA, USA). Statistical significance was assumed at p ≤ 0.05. Grubbs test was performed in Excel 2007 (Microsoft Corp., USA)

### Example 2. General patients' characteristics in NC and CL.

NC liver specimens were obtained from resections on 55.6% female and 44.4% male patients (mean age: 57.0 ± 11.8 yrs.). Liver explants of CL were derived from 75% male and 25% female patients (mean age: 56.1 ± 6.8 y [n.s.]). The underlying diseases varied strongly between the groups (c.f. Tab. 1).

### Example 3. General metabolic characteristics in NC and CL specimens.

Time courses of glucose metabolism (production vs. consumption), lactate production and oxygen consumption were recorded (**Figure 2**). NC tissues provided a rather stable amount of glucose throughout the perfusion process presenting a flat course of the values with a maximum of 1.28 ± 0.49 mg x dL⁻¹ x g⁻¹ at 2 h (**Figure 2A**). While some CL liver specimens showed a positive glucose balance for a 6-h period, several CL tissues switched to glucose consumption within 1-4 h revealing negative mean values with a minimum of -2.2 ± 2.6 mg x dL⁻¹ x g⁻¹ at 6 h (**Figure 2A**). Although lactate production increased linearly in both groups, the slope in CL was steeper when compared to NC and differed significantly (p=0.0004, **Figure 2B****).** Maximal values measured after 6 h were 0.36 ± 0.04 mmol x L⁻¹ x g⁻¹ for NC *vs.* 0.83 ± 0.1 mmol x L⁻¹ x g⁻¹ for CL tissue. Furthermore, the slope of the lactate curves differed significantly (p<0.0001, **Tab. 2**) indicating a stronger production rate in CL tissue.

**Table 2. Calculation of slope values from non-cirrhotic (NC) and cirrhotic (CL) liver samples. A slope was indicated when at least one r value of the Pearson correlation analysis was >0.9 (not shown) although the correlation in the related graph did not appear linear. The difference of the slopes is given as the P value.**

| **Parameter** | **Slope (average production/h)** | | | **Difference of slopes** |
|---|---|---|---|---|
| | **NC** | **CL** | **Units** | ***P*** |
| **Glucose** | | | | |
| **Lactate** | 0.0518 | 0.132 | mmol/L/g/h | < 0.0001 |
| **Oxygen** | | | | |
| **Urea** | 0.0226 | 0.0165 | mg/dL/g/h | 0.116 |
| **Albumin** | 0.3891 | 0.7223 | µg/mL/h | 0.0067 |
| **Bile acids** | 0.014 | 0.0153 | µmol/L/g/h | 0.7979 |
| **LDH** | 24.22 | 5.372 | U/L/g/h | < 0.0001 |
| **GLDH** | 3.19 | 0.379 | U/L/g/h | < 0.0001 |
| **AST** | 18.23 | 6.316 | U/L/g/h | 0.0003 |
| **ALT** | 13.16 | 1.563 | U/L/g/h | < 0.0001 |
| **γGT** | 0.0976 | 0.0215 | U/L/g/h | 0.004 |

Oxygen consumption did not differ between the groups and remained largely constant throughout the observation period, with a maximum of 1.66 ± 0.36 µL x min⁻¹ x g⁻¹ at 4 h for NC tissue (**Figure 2C**).

### Example 4. Urea, albumin and bile acids in NC and CL specimens.

Similar time courses for urea increased slightly in both NC and CL tissues over time (**Figure 3A**); the maximal values at 6 h were 0.16 ± 0.03 mg x dL⁻¹ x g⁻¹ for NC and 0.13 ± 0.02 mg x dL⁻¹ x g⁻¹ for CL tissue. The production of albumin was strongly elevated in NC tissues concomitant with a steeper slope of the time course (**Figure 3B**). For NC, the albumin values reached a maximum of 3.5 ± 0.6 µg x mL⁻¹ x g⁻¹ at 6 h while CL tissue exhibited a rather flat course with a maximum of 1.7 ± 0.5 µg x mL⁻¹ x g⁻¹ at 5 h of perfusion. The secretion of bile acids increased during the perfusion time, although the concentration in the CL group was already elevated at the experimental onset and remained significantly elevated at all times (p=0.0047) when compared to NC (**Figure 3C**). Maxima at the end of perfusion were 0.11 ± 0.02 µmol x L⁻¹ x g⁻¹ for NC and 0.19 ± 0.03 µmol x L⁻¹ x g⁻¹ for CL, respectively.

### Example 5. Liver enzymes in NC and CL specimens.

In order to assess the maintenance of liver cell integrity during perfusion, established clinical markers of liver damage derived from different hepatocytic compartments were determined in the perfusate (**Figure 4**). In CL tissues, slight increases in the activities of all liver enzymes tested for were observed over the perfusion time. At 6 h, maximal values in CL were obtained for aspartate aminotransferase (AST) (44.7 ± 8.9 U x L⁻¹ x g⁻¹), alanine aminotransferase (ALT) (12.5 ± 5.1 U x L⁻¹ x g⁻¹), lactate dehydrogenase (LDH) (38.2 ± 5.6 U x L⁻¹ x g⁻¹), glutamate dehydrogenase (GLDH) (2.5 ± 0.6 U x L⁻¹ x g⁻¹) and γ-glutamyltransferase (yGT) (0.21 ± 0.04 U x L⁻¹ x g⁻¹). In contrast, beginning at 2-3 h after the onset of perfusion, NC livers exhibited a stronger increase in these parameters, leading to significant differences for ALT, LDH, GLDH and yGT between the groups. At the end of perfusion, the highest values were measured for AST (117 ± 29 U x L⁻¹ x g⁻¹), ALT (80.5 ± 23.6 U x L⁻¹ x g⁻¹), LDH (152 ± 34 U x L⁻¹ x g⁻¹) and GLDH (23.0 ± 6.7 U x L⁻¹ x g⁻¹). In NC specimens, the release of yGT had a plateau at around 4-5 h of perfusion and slightly dropped during the last hour. Thus, the maximal yGT value (6.4 ± 0.18 U x L⁻¹ x g⁻¹) was found after 5-h perfusion.

### Example 6. Apoptosis and necrosis in NC and CL specimens.

As a consequence of cell death, intracellular proteins like cytokeratin 18 are released into the extracellular matrix. Only during apoptosis a neoepitope of CK18 - M30 - is generated by caspase cleavage. In the perfusate, the M65 ELISA thus detects the total amount of cell death while the M30 ELISA specifically accounts for apoptosis (**Figure 5**). M65 mean values ranged from 739 ± 251 U x L⁻¹ x g⁻¹ in NC liver tissue after 1 h to 1482 ± 527 U x L⁻¹ x g⁻¹ after 6 h of perfusion (**Figure 5A**). Mean values for CL tissue started with 632 ± 154 U x L⁻¹ x g⁻¹ after 1 h and after 3 h had a plateau with a maximum of 985 ± 202 U x L⁻¹ x g⁻¹. The courses of the M30 means nearly paralleled one another for NC and CL and rose from 15 U x L⁻¹ x g⁻¹ (1 h) to 36.7 ± 16.4 and 43.7 ± 10.5 U x L⁻¹ x g⁻¹ (6 h), respectively (**Figure 5B**). While the courses of M65 or M30 did not differ significantly, the M30/M65 ratio was significantly higher in the CL specimens (p=0.0056, **Figure 5C**). While this ratio remained fairly stable at 2% for NC throughout perfusion, it increased for CL from around 3.5% (1 h) to almost 6% (6 h).

### Example 7. Cytochrome P450 enzymes in NC and CL specimens.

As a more detailed measure of hepatic function, the inventors investigated phase-I conversions of three model cytochrome P450 substrates. In the initial 30-min interval, OH-midazolam and OH-diclofenac were formed quite rapidly, but dropped continuously thereafter (CYP3A4, **Figure 6B****/E;** CYP2C9, **Figure 6C****/F**) due to formation the of phase-II products. The glucuronides of OH-midazolam and OH-diclofenac were identified by qualitative Q-TOF analysis. The phase-I metabolite of phenacetin was built within the first 2 h and then plateaued (CYP1A1/1A2, **Figure 6A****/D**). As a result of overlapping phase-I and phase-II reactions, the courses of NC and CL tissue intersected once the phase-I reactions were completed in NC. To quantify the extent of both reactions for NC and CL, the areas under the curves (AUCs) were calculated before and after this intersection (**Figure 6G-J**). In CL tissue, phase-I products of all three CYP substrates were generated at a much slower rate than in NC tissue, leading to deviations in the AUCs from -24.2 to -69.3% (**Figure 6G-J****, early**). Additionally, the protracted presence of phase-I products for CL tissue - with higher AUCs of 53.8 % and 26.9 % for CYP3A4 and CYP2C9, respectively (**Figure 6H****/J, late**) - also suggests a much slower formation of phase-II products in CL. None of the observed differences for CYP activities in NC and CL tissue reached statistical significance.

### Example 8. Discrimination between cirrhotic and non-cirrhotic liver.

Prothrombin, or coagulation factor II, is synthesized by hepatocytes. It is subsequently proteolytically cleaved to form the trypsin-like serine protease thrombin, which accelerates the formation of fibrin. In contrast, the clotting time - as measured by either determining the thromboplastin time or by calculating the international normalized ratio (INR) - is also a marker of liver function, but it cannot be determined properly upon *ex-vivo* perfusion due to missing blood components. Therefore, and in order to expand the readout of parameters relevant for assessing the quality of organ (here: liver) protection, the release of prothrombin from perfused human liver samples was determined as an additional measure for the hepatocytes' synthetic capabilities. Specifically, the synthesis of prothrombin over the course of perfusion was determined for non-cirrhotic vs. cirrhotic human liver samples. The results are shown in Fig. 7 and indicate that non-cirrhotic and cirrhotic liver tissue can clearly be discriminated when using the perfusion system illustrated in figure 1. Prothrombin synthesis is therefore a useful additional parameter for characterizing the novel perfusion system, and for monitoring the performance of perfused liver or of liver samples when employing this system.

### Example 9. Employment of an oxygen-enhanced serum-free solution for organ preservation.

Liver pieces of 52.3 ± 3.6 g were connected to the perfusion circuit *via* an indwelling venous catheter. The organ samples were perfused with an oxygen-enhanced solution (e.g. "Oncostore" of Oncoscience AG, Wedel, Germany) over a period of 6 h at a flow rate of 50 mL/min. Perfusate samples were taken at hourly intervals and analyzed for the following parameters:
1) Glucose metabolism, lactate production, and oxygen consumption for assessing the tissue's overall metabolic performance;
2) Urea synthesis, albumin release, and the production of bile acids for assessing the liver-specific biochemical synthesis performance;
3) Liver enzymes LDH, AST, ALT, yGT and GLDH as markers of cell injury; and
4) The markers M65 (indicating total cell death) and M30 (selectively indicating apoptosis) for assessing the extent and assignment of cell death as a measure for organ decay.

The oxygen-enhanced solution was used at 250 mL per resected normal liver tissue sample. Normalized to 1 g of tissue, the measured values are represented in Figures 8 to 17 as means ± SEM. In addition, p-values were calculated.

Results were compared with the results obtained with Williams E solution that had been employed with all other investigations described in this patent specification.

As can be seen from Fig. 8 to 17, when compared with Williams E solution, employment of the oxygen-enhanced solution allowed for a clear improvement of functional hepatocellular parameters of normal human liver tissue in the *ex-vivo* perfusion system illustrated in figure 1. In particular, these findings can be presumed as favorable for enabling longer perfusion times.

## Claims

1. An organ perfusion system (1), said system (1) comprising:
(a) a bowl (10) for supporting an explant,
(b) a vessel (11) for storing the perfusion medium reservoir;
(c) a drive propulsion device consisting of two perfusion pumps (12, 20) with two peristaltic heads, respectively, wherein the first perfusion pump (12) is configured for the bidirectional transport of the perfusion medium and the second perfusion pump (20) is configured to provide fresh perfusion medium;
(d) a sensing means for measuring and controlling the oxygen concentration (13) in said perfusion medium;
(e) a sampling means for collecting the perfusion medium and for applying nutrients (14);
wherein said bowl (10), said vessel (11), said drive means (12), said sensing means (13) and said sampling means (14) are integrated in an essentially closed circuit *via* circuit tubing for the provision of a constant flow rate, being supplied with nutrients and oxygen, to said explant for at least six hours.

2. The organ perfusion system (1) of claim 1, said system (1) further comprising sensing means for measuring and controlling the pressure (15) in said perfusion medium and/or sensing means for measuring and controlling the temperature (16) of said perfusion medium and/or degassing means (17) for removing air bubbles that interfere with said system (1).

3. The organ perfusion system (1) of claim 1 or 2, wherein said explant is derived from human liver, heart, lung, small intestine or kidney, preferably the organ explant is selected from liver specimens, liver segments, split liver transplants and whole-organ liver transplants derived from patients or healthy organ donors.

4. The organ perfusion system (1) of any of claims 1-3, wherein said bowl (10) comprises a water bath maintaining the temperature between 33°C and 42°C, more preferably between 35.8°C and 37.2°C, most preferably at 37°C.

5. The organ perfusion system (1) of any of claims 1-4, being configured to connect said explant in said bowl (10) *via* at least four branches of the circuit tubing ending in venous catheters, and configured to collect the perfusion medium efflux in said bowl (10) and re-convey it to the vessel (11).

6. The organ perfusion system (1) of any of claims 1-5, wherein said sensing means for measuring and controlling the oxygen concentration (13) comprise an airstone (131) and are configured to measure the oxygen concentration of said perfusion medium before said medium is introduced into said explant.

7. The organ perfusion system (1) of any of claims 1-6, wherein said sampling means (14) are three-way valves, which are installed before (141) and after (142) said perfusion medium passing said explant, wherein said sampling means (141) are installed for collecting said perfusion medium before passing said explant and said sampling means (142) are installed for collecting and for applying nutrients to the perfusion medium after passing said explant.

8. The organ perfusion system (1) of any of claims 2-7, wherein said sensing means for measuring and controlling the pressure (15) are configured to measure the pressure of said perfusion medium during degassing said perfusion medium, wherein said pressure ranges from 40 to 100 mm Hg.

9. The organ perfusion system (1) of any of claims 2-8, wherein said sensing means for measuring and controlling the temperature (16) are configured to measure the temperature of said perfusion medium before said medium is introduced into said degassing means (17), which remove air bubbles before said medium is introduced into said explant, wherein said sensing means for measuring and controlling the temperature (16) are a glass heating coil flushed with water and the system is configured to keep the temperature of said perfusion medium between 33 and 42°C, preferably between 35.8 and 40°C, most preferably at 40°C.

10. A method or preserving human or animal explants ex vivo by applying said perfusion system (1) according to any of claims 1-9, wherein the explant is not returned to the donor.

11. Use of the organ perfusion system (1) according to any of claims 1-9 ex vivo in a method of therapeutically oriented research or basic research on human or animal liver explants derived from patients, healthy organ donors, or animal sources.

12. Use of the organ perfusion system (1) according to any of claims 1-9 ex vivo in a method of identifying characteristic differences between human or animal liver explants derived from patients, healthy organ donors, or animal sources.

## Patentansprüche

1. Organperfusionssystem (1), wobei das System (1) umfasst:
(a) Schüssel (10) zum Halten eines Explantats;
(b) Behältnis (11) zum Aufbewahren des Perfusionsmediumreservoirs;
(c) Antriebseinheit bestehend aus zwei Perfusionspumpen (12, 20) mit jeweils zwei peristaltischen Köpfen, wobei die erste Perfusionspumpe (12) für den bidirektionalen Transport des Perfusionsmediums gestaltet ist und die zweite Perfusionspumpe (20) für die Bereitstellung von frischem Perfusionsmedium gestaltet ist;
(d) Messmittel zum Messen und Kontrollieren der Sauerstoffkonzentration (13) im Perfusionsmedium;
(e) Probenentnahmemittel zum Auffangen des Perfusionsmediums und zur Verabreichung von Nährstoffen (14);
wobei die Schüssel (10), das Behältnis (11), die Antriebsmittel (12), die Messmittel (13) und die Probenentnahmemittel (14) in einem im Wesentlichen geschlossenen Kreislauf mittels eines Kreislaufschlauchsystems für die Bereitstellung einer konstanten Fließrate, beliefert mit Nährstoffen und Sauerstoff, zum Explantat für mindestens sechs Stunden integriert sind.

2. Organperfusionssystem (1) nach Anspruch 1, wobei das System (1) weiterhin Messmittel zum Messen und Kontrollieren des Drucks (15) im Perfusionsmedium und/oder Messmittel zum Messen und Kontrollieren der Temperatur (16) des Perfusionsmediums und/oder Entgasungsmittel (17) zum Entfernen von Luftblasen, die das System (1) stören, umfasst.

3. Organperfusionssystem (1) nach Anspruch 1 oder 2, wobei das Explantat aus der Leber, dem Herzen, der Lunge, dem Dünndarm oder den Nieren des Menschen stammt, wobei das Organexplantat vorzugsweise aus Leberproben, Leberabschnitten, Split-Lebertransplantaten und Ganz-Organ-Lebertransplantaten, die aus Patienten oder gesunden Organspendern stammen, ausgewählt ist.

4. Organperfusionssystem (1) nach einem der Ansprüche 1-3, wobei die Schüssel (10) ein Wasserbad, das die Temperatur bei zwischen 33°C und 42°C, mehr bevorzugt bei zwischen 35,8°C und 37,2°C, am meisten bevorzugt bei 37°C hält, umfasst.

5. Organperfusionssystem (1) nach einem der Ansprüche 1-4, das so gestaltet ist, das Explantat in der Schüssel (10) mit mindestens vier Ästen des Kreislaufschlauchsystems, die in den venösen Kathetern enden, anzuschließen, und so gestaltet ist, den Perfusionsmediumefflux in der Schüssel (10) aufzufangen und ihn zum Behältnis (11) zurückzuleiten.

6. Organperfusionssystem (1) nach einem der Ansprüche 1-5, wobei die Messmittel zum Messen und Kontrollieren der Sauerstoffkonzentration (13) einen Ausströmer (131) umfassen und so gestaltet sind, die Sauerstoffkonzentration des Perfusionsmediums, bevor das Medium in das Explantat eingeleitet wird, zu messen.

7. Organperfusionssystem (1) nach einem der Ansprüche 1-6, wobei die Probenentnahmemittel (14) Dreiwegeventile sind, die bevor (141) und nachdem (142) das Perfusionsmedium durch das Explantat geht, eingebaut sind, wobei die Probenentnahmemittel (141) zum Auffangen des Perfusionsmediums, bevor es durch das Explantat geht, eingebaut sind und die Probenentnahmemittel (142) zum Auffangen und zum Verabreichen von Nährstoffen zum Perfusionsmedium, nachdem es durch das Explantat geht, eingebaut sind.

8. Organperfusionssystem (1) nach einem der Ansprüche 2-7, wobei die Messmittel zum Messen und Kontrollieren des Drucks (15) so gestaltet sind, den Druck des Perfusionsmediums während des Begasens des Perfusionsmediums zu messen, wobei der Druck bei zwischen 40 bis 100 mm Hg liegt.

9. Organperfusionssystem (1) nach einem der Ansprüche 2-8, wobei die Messmittel zum Messen und Kontrollieren der Temperatur (16) so gestaltet sind, die Temperatur des Perfusionsmediums zu messen, bevor das Medium in die Entgasungsmittel (17) eingeleitet wird, die die Luftblasen bevor das Medium in das Explantat eingeleitet wird, entfernen, wobei die Messmittel zum Messen und Kontrollieren der Temperatur (16) eine Heizschlange aus Glas, die mit Wasser durchspült ist, darstellen und das System so gestaltet ist, die Temperatur des Perfusionsmediums bei zwischen 33 und 42°C, vorzugsweise bei zwischen 35,8 und 40°C, am meisten bevorzugt bei 40°C zu halten.

10. Verfahren zur Aufbewahrung von menschlichen oder tierischen Explantaten ex *vivo* durch Anwendung des Perfusionssystems (1) nach einem der Ansprüche 1-9, wobei das Explantat dem Spender nicht zurückgegeben wird.

11. Ex-vivo Verwendung des Organperfusionssystems (1) nach einem der Ansprüche 1-9 in einem Verfahren der therapeutisch orientierten Forschung oder Grundlagenforschung an menschlichen oder tierischen Leberexplantaten, die von Patienten, gesunden Organspendern oder aus tierischen Quellen stammen.

12. Ex-vivo Verwendung des Organperfusionssystems (1) nach einem der Ansprüche 1-9 in einem Verfahren der Identifizierung charakteristischer Unterschiede zwischen menschlichen und tierischen Leberexplantaten, die von Patienten, gesunden Organspendern oder aus tierischen Quellen stammen.

## Revendications

1. Système de perfusion d'organe (1), ledit système (1) comprenant :
(a) un bol (10) pour accueillir un explant,
(b) un récipient (11) pour stocker le réservoir de milieu de perfusion ;
(c) un dispositif d'entraînement à propulsion constitué de deux pompes à perfusion (12, 20) dotées de deux têtes péristaltiques, respectivement, la première pompe à perfusion (12) étant configurée pour le transport bidirectionnel du milieu de perfusion et la seconde pompe à perfusion (20) étant configurée pour fournir du milieu de perfusion frais ;
(d) un moyen de détection pour mesurer et contrôler la concentration en oxygène (13) dans ledit milieu de perfusion ;
(e) un moyen d'échantillonnage pour collecter le milieu de perfusion et pour appliquer des nutriments (14) ;
dans lequel ledit bol (10), ledit récipient (11), ledit moyen d'entraînement (12), ledit moyen de détection (13) et ledit moyen d'échantillonnage (14) sont intégrés dans un circuit essentiellement fermé par l'intermédiaire d'une tubulure de circuit pour la fourniture d'un débit constant, alimenté en nutriments et en oxygène, audit explant pendant au moins six heures.

2. Système de perfusion d'organe (1) selon la revendication 1, ledit système (1) comprenant en outre des moyens de détection pour mesurer et contrôler la pression (15) dans ledit milieu de perfusion et/ou des moyens de détection pour mesurer et contrôler la température (16) dudit milieu de perfusion et/ou des moyens de dégazage (17) pour éliminer les bulles d'air qui gênent ledit système (1).

3. Système de perfusion d'organe selon la revendication 1 ou 2, dans lequel ledit explant est issu d'un foie, d'un cœur, d'un poumon, d'un intestin grêle ou d'un rein humain, l'explant d'organe étant choisi de préférence parmi des spécimens de foie, des segments de foie, des greffons de foie partagé et des greffons de foie entier provenant de patients ou de donneurs d'organes sains.

4. Système de perfusion d'organe (1) selon l'une quelconque des revendications 1 à 3, dans lequel ledit bol (10) comprend un bain d'eau dont la température est maintenue entre 33 °C et 42 °C, de manière davantage préférée entre 35,8 °C et 37,2 °C, de manière préférée entre toutes à 37 °C.

5. Système de perfusion d'organe (1) selon l'une quelconque des revendications 1 à 4, configuré pour relier ledit explant dans ledit bol (10) par l'intermédiaire d'au moins quatre branches de la tubulure de circuit se terminant par des cathéters veineux, et configuré pour collecter l'efflux de milieu de perfusion dans ledit bol (10) et le réacheminer jusqu'au récipient (11).

6. Système de perfusion d'organe (1) selon l'une quelconque des revendications 1 à 5, dans lequel lesdits moyens de détection pour mesurer et contrôler la concentration en oxygène (13) comprennent un barboteur (131) et sont configurés pour mesurer la concentration en oxygène dudit milieu de perfusion avant que ledit milieu soit introduit dans ledit explant.

7. Système de perfusion d'organe (1) selon l'une quelconque des revendications 1 à 6, dans lequel lesdits moyen d'échantillonnage (14) sont des soupapes à trois voies, qui sont installées avant (141) et après (142) que ledit milieu de perfusion passe par ledit explant, dans lequel lesdits moyens d'échantillonnage (141) sont installés pour collecter ledit milieu de perfusion avant passage par ledit explant et lesdits moyens d'échantillonnage (142) sont installés pour collecter et pour appliquer des nutriment au milieu de perfusion après passage par ledit explant.

8. Système de perfusion d'organe (1) selon l'une quelconque des revendications 2 à 7, dans lequel lesdits moyens de détection pour mesurer et contrôler la pression (15) sont configurés pour mesurer la pression dudit milieu de perfusion pendant le dégazage dudit milieu de perfusion, ladite pression allant de 40 à 100 mm de Hg.

9. Système de perfusion d'organe (1) selon l'une quelconque des revendications 2 à 8, dans lequel ledit lesdits moyens de détection pour mesurer et contrôler la température (16) sont configurés pour mesurer la température dudit milieu de perfusion avant que ledit milieu soit introduit dans lesdits moyens de dégazage (17), qui éliminent les bulles d'air avant que ledit milieu soit introduit dans ledit explant, dans lequel lesdits moyens de détection pour mesurer et contrôler la température (16) sont un serpentin chauffant de verre rincé à l'eau et le système est configuré pour maintenir la température dudit ledit milieu de perfusion entre 33 °C et 42 °C, de préférence entre 35,8 °C et 40 °C, de manière préférée entre toutes à 40 °C.

10. Procédé de conservation d'explants humains ou animaux ex vivo par application dudit système de perfusion (1) selon l'une quelconque des revendications 1 à 9, dans lequel l'explant n'est pas rendu au donneur.

11. Utilisation du système de perfusion d'organe (1) selon l'une quelconque des revendications 1 à 9 ex vivo dans un procédé de recherche à orientation thérapeutique ou de recherche fondamentale sur les explants de foie provenant de patients, de donneurs d'organes sains ou de sources animales.

12. Utilisation du système de perfusion d'organe (1) selon l'une quelconque des revendications 1 à 9 ex vivo dans un procédé d'identification des différences caractéristiques entre des explants de foie humains ou animaux provenant de patients, de donneurs d'organes sains ou de sources animales.
